# EUROPEAN PATENT SPECIFICATION

(11) **EP 2 605 539 B1**
(45) Date of publication and mention of the grant of the patent: **11.03.2015**
(21) Application number: 11193128.3
(22) Date of filing: 13.12.2011
(51) Int. Cl.: H04Q 9/00

(54) **Method and system for sensor classification**
SenzorKlassifizierungsVerfahren und Vorrichtung
Procédé et système pour la classification de capteurs

(43) Date of publication of application: 19.06.2013
(73) Proprietor: ATS Group (IP Holdings) Limited, Road Town, Tortola (VG)
(72) Inventor: Hartmann, Melanie c/o AGT Group (R&D) GMBH, 64295 Darmstadt (DE); Bauer, Alexander c/o AGT Group (R&D) GMBH, 64295 Darmstadt (DE); Blanke, Ulf c/o AGT Group (R&D) GMBH, 64295 Darmstadt (DE)
(74) Representative: Pearl Cohen Zedek Latzer Baratz UK LLP

(56) References cited:
- US-A1- 2010 156 667

## Description

### Technical Field

The present invention generally relates to electronic data processing, and more particularly, relates to methods, computer program products and systems to support sensor configuration.

### Background

The deployment of sensors in confined areas such as buildings or private ground is quite cumbersome as it requires manual effort and expertise to configure which information the sensors provide in order to be useful for an infrastructure like for example a Smart Building infrastructure. Smart Buildings in this context are buildings equipped with a plurality of sensor registered in the Smart Building infrastructure and being able to provide useful information about the current state of the building. The manual efforts typically come along with high deployment cost for new sensors. Further, sensors may be able to provide information which was not considered at the time of configuration. For example, a light sensor may also be capable to give an estimate of the temperature in a room. That is, the full potential of installed sensors is often not exploited by preconfigured installations.

One approach for addressing the sensor deployment problem is to implement plug & play capabilities for sensor devices as they are known from USB PC devices [Semantic Challenges for Sensor Plug & Play, Bröning et al, 2009]. In this approach the sensor devices need to provide a self-description of their measurement capabilities in a standardized machine-interpretable format. A large variety of such sensor description languages has been proposed in literature, but only a few of them are in use for very specific domains (e.g., A Survey of the Semantic Specification of Sensors Compton et al, 2009). This approach is purely based on manual effort and no hint is given how to support the manual configuration otherwise.

I n general however, industry standardization for sensor networks has focused on the network communication layer. Measurement data standardization has only been achieved for some specific sensor types, such as microphones, as part of the IEEE 1451 (e.g., Understanding IEEE 1451 - Networked Smart Transducer Interface Standard Song and Lee, 2008).

Another example of a new sensor deployment can be found in Patent document US 2010/0156667.

### Summary

There is therefore a need to improve the deployment and corresponding configuration of sensors within a respective sensor infrastructure. Sensors within such a sensor infrastructure are typically nodes in a sensor network and will therefore also be referred to as sensor nodes in the following.

This problem is solved by the independent claims accordingly.

A computer implemented method for sensor classification according to claim 1 includes receiving a series of measurement data from an unclassified sensor node. The unclassified sensor node is unknown in an infrastructure knowledge base. This may be due to a recent deployment of the sensor node into a sensor infrastructure, which may include one or more sensor networks. For example, the sensor infrastructure may be modelled in the infrastructure knowledge base, which is a data structure persistently stored in an appropriate data storage component to keep track of all sensor nodes which are deployed in the sensor infrastructure. This may include the information for each sensor node about the respective location of the sensor node and the measurement capabilities of the respective sensor node. A measurement capability can be described in the form of a corresponding capability type, such as temperature, carbon dioxide, light, etc.

The series of measurement data may then be logged in a first database. The first database will also be referred to as history DB hereinafter because it includes the measurement data history of all sensor nodes deployed in the respective sensor infrastructure. The first database may include information such as, for example, a timestamp indicating the time at which measurement data were measured, a value of the measurement, a sensor identifier to indicate form which sensor node the measurement data originate, or other useful information about the respective measurement.

From the series of measurement data, which was received from the unclassified sensor and which is now stored in the first database a test pattern can be extracted. The test pattern is a result of applying at least one feature extraction algorithm to the series of measurement data. For example, this can be an average value for the series of measurement data over the last 24 hours or a characteristic frequency spectrum in the series of measurement data. Details are discussed further down in the detailed description. In other words, the result of applying a feature extraction algorithm can be a single value or a vector including multiple values. Further, a test pattern can include values or vectors of multiple feature extraction algorithms.

Once the test pattern has been extracted it can be compared to reference patterns which are stored in a second database. This second database will also be referred to a feature DB because the test patterns in the feature DB have information about features associated with typical capabilities of the various sensor nodes in the sensor infrastructure. This comparison determines a similarity measure of the test pattern with a predefined reference pattern stored in the second database. A similarity measure can be determined by various algorithms which will be explained in more detail in the further description. For example correlation methods can be used. The term correlation as used hereinafter is not intended to be limiting in any way. Rather it is used as a synonym for the term similarity measure in specific examples, where correlation methods are used although other similarity measures could also be used. The similarity measure is a pure value without any unit of measurement. It represents a similarity between the compared patterns, which depends on the used algorithm. The similarity measure is associated with a confidence value which indicates the reliability of the similarity measure in view of the used similarity algorithm. That is, the confidence value is a normed representation of the similarity between the compared patterns. Each reference pattern in the feature DB classifies a capability type of at least one sensor in the sensor infrastructure. Similar to the test pattern, the reference patterns can have a vector structure for a specific similarity algorithm and include a plurality of vectors for a plurality of similarity algorithms. Advantageously, the similarity algorithms correspond to the respective feature extraction algorithms used for generating the test patterns. In other words, each similarity algorithm has one or more appropriate extraction algorithms which are suitable to generate test patterns which can be used as input for the determining of similarity measures with an associated similarity algorithm.

In case the confidence value is above a predefined threshold value the capability type which corresponds to the reference pattern used in the comparison is suggested for classifying the unclassified sensor node. In other words, if the comparison yields a high enough similarity which can be expressed as a confidence value that is considered to be high enough, the result of the comparison indicates a sufficiently high probability that the unknown sensor has a capability which already exists within the sensor infrastructure or which is already known otherwise (e.g., from sensor behaviour patterns being available as reference patterns). That is, the series of measurement data may correspond to a phenomenon which is already measured by other sensor nodes in the sensor infrastructure being classified in the infrastructure knowledge base with the respective capability type. Therefore, the assumption can be made that the unknown sensor has the same capability type as those sensor nodes already registered in the infrastructure knowledge base.

As a consequence an update of the infrastructure knowledge base can be initiated to register the previously unclassified sensor node with the suggested capability type if the suggested capability type is accepted. Acceptance may occur automatically if the confidence value is above respective threshold value or it may occur explicitly by a user giving consent to the suggested capability type. After the update the previously unknown sensor node is now a registered sensor node in the infrastructure knowledge base. Optionally, the test pattern may be added to the feature DB as a new reference patterns for the respective capability type.

As a result of the above described method a newly deployed sensor node unknown in the sensor infrastructure can be configured without or with less manual effort by using appropriate correlations algorithms which can automatically determine the capability type of a newly discovered sensor node by correlating a series of measurement data of the unclassified sensor with predefined reference pattern. Those predefined reference patterns can either be automatically generated based on earlier series of measurement data of other sensor nodes having respective capability type or can also be based on general models describing a corresponding measurement capability. Inferring dependencies/correlations between measurements from observation can be exploited to increase the applicability and robustness of the sensor infrastructure for example in a Smart Building, because from the updated infrastructure knowledge base it is known which sensor nodes can be replaced by others with the same capability type.

The above method thereby correlates sensor measurement data with reference pattern which are based on data originating from a different location and a different time than the observed series of measurement data of the newly deployed or discovered sensors. Advanced similarity measurement techniques, such as Dynamic Time Warping (DTW), are robust to changes induced by differences in location and season/timing and can be applied to automate sensor configuration in sensor infrastructures by the claimed method.

Further embodiments are a computer program product according to claim 10 and a computer system according to claim 11. The computer system can run the computer program product to execute the method according to claim 1.

In an alternative embodiment the computer system can also execute a computer implemented method according to claim 5. In the alternative embodiment the sensor node to be classified is already known in the infrastructure knowledge base but a further capability type of the sensor node is discovered and configured accordingly. In this embodiment the computer system receives from a first sensor node a first series of measurement data and from a second sensor node a second series of measurement data. The first sensor node is already classified with a first capability type the infrastructure knowledge base and the second sensor node is classified with a second capability type. The first and second capability types are different.

The history DB logs the first series of measurement data and the second series of measurement data. From the first and second series of measurement data first and second test patterns are extracted, respectively.

The computer system then determines a relationship between the first sensor node and the second sensor node by a similarity measure comparison of the first test pattern with the second test pattern. The comparison is associated with a confidence value. If the confidence value is above a predefined threshold value the system suggests the first capability type as an additional classification of the second sensor node. If the suggested first capability type is accepted the computer system initiates an update of the infrastructure knowledge base to add the first capability type as the additional classification of the second sensor node.

In this embodiment the computer system is able to identify relations between sensor measurement data which can be exploited to improve the sensor infrastructure robustness to sensor failure. For example, if the system learned that light information in a specific room can be used as approximation for the temperature in this room, the system will still work if the temperature sensor fails. For example, such a correlation between light sensor and temperature sensor may be discovered because people coming to an office always switch on the light shortly after heating was switched on automatically because of a heating program. Vice versa, when leaving the office they switch off the light and the heating may be switched off automatically shortly afterwards. Using this correlation knowledge a temperature-based control may be applied even to parts of the building where no temperature sensor is installed.

Further embodiments and advantages of the invention are described by the independent claims.

### Brief Description of the Drawings

FIG. 1 is a simplified computer system according to one embodiment of the invention;
FIG. 2 is a flowchart of a computer implemented method according to one embodiment of the invention;
FIG. 3 is a flowchart of a computer implemented method according to an alternative embodiment of the invention;
FIG. 4 illustrates a weighted ranking mechanism for the confidence value
FIGs. 5 to 7 show real environmental measurement data of different sensor nodes; and
FIG. 8 shows classification results of the environmental sensor nodes for various capability types.

### Detailed Description

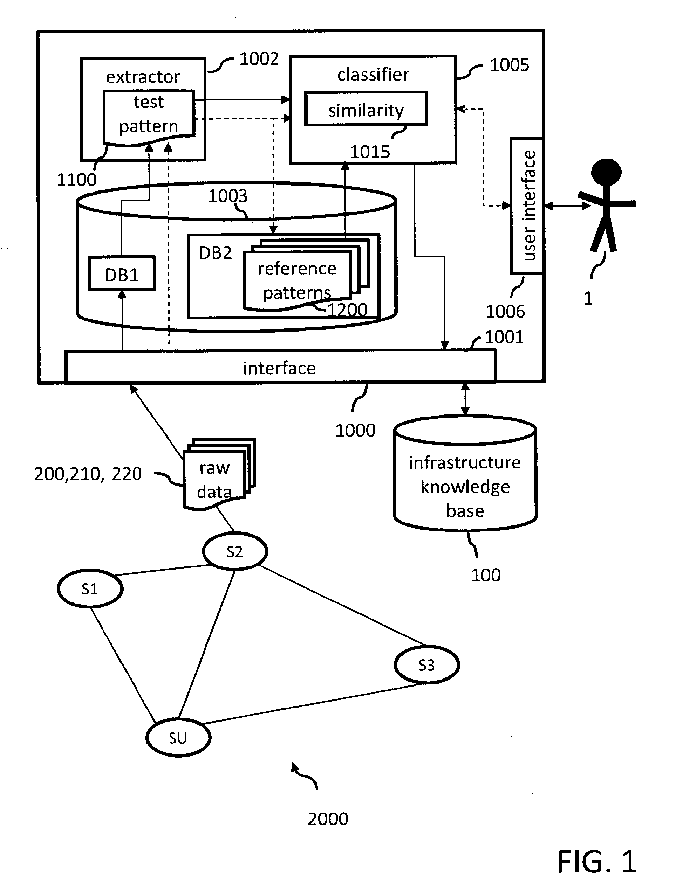

FIG. 1 is a simplified computer system 1000 according to one embodiment of the invention. The system includes an interface component 1001, which allows communication with a sensor infrastructure 2000. The sensor infrastructure 2000 may include one or more sensor networks, where a sensor network is defined as a collection of sensor nodes S1, S2, S3, SU and has at least one gateway S2.

A gateway can communicate with each sensor of the respective sensor network, either directly or indirectly via other sensor nodes of the sensor network. It is also possible that a sensor node belongs to multiple sensor networks and can then communicate with multiple gateways. A gateway does not need to be a sensor on its own but can simply be a node used for communication purposes. A gateway may use wireless communication standards, such as for example, ZigBee, IEEE 802.15.4 or 6lowPAN. The gateways are communication interfaces also used to establish communication between the computer system 1000, for example through the interface component 1001, and the respective sensor network. A gateway can be a wireless sensor node used for communication, a PC, a mobile phone or any other dedicated piece of hardware, which is appropriate for routing communication between the computer system and the sensor network. Alternatively, a sensor node can be directly communicatively coupled with the interface component 1001.

The sensor nodes S1, S2, S3, SU can be devices containing at least one physical sensor and being communicatively coupled with at least one gateway. The coupling can be established using wireless communication standards (e.g., WLAN, Bluetooth, etc.), wired communication standards (e.g, LAN, Ethernet) or through physical integration with the gateway itself using a kind of internal bus communication. A sensor node may be able to determine its position or location, e.g., through a global positioning system (GPS) sensor or through indoor positioning approaches such as WiFi triangulation or WiFi fingerprinting, and may send its measurement values with accurate location information to the respective gateway.

Through the interface component 1001 the computer system 1000 can receive measurement data 200, 210, 220 from the plurality of sensor nodes S1, S2, S3, SU in the sensor infrastructure. In the example of FIG. 1 sensor node SU is assumed to be newly deployed to the sensor infrastructure and therefore still being unknown in an infrastructure knowledge base 100. The infrastructure knowledgebase can be either part of the computer system 1000 or, alternatively, as shown in FIG. 1, can be stored in an appropriate external storage device, which is communicatively coupled with the computer system through the interface component 1001. The infrastructure knowledge base includes the knowledge of the sensor nodes being part of the sensor infrastructure 2000. This includes information about the sensor identification number, the physical location data of the sensor and a capability type for each sensor. The capability type describes a measurement capability of the respective sensor node such as temperature, carbon dioxide, light, etc. In the example, the sensor node SU has just been deployed to the sensor infrastructure 2000 and is not yet registered in the infrastructure knowledge base 100. Therefore, the unknown sensor node SU has no capability type classification so far. At this stage, the computer system 1000 does not know about the capabilities of the unknown sensor SU and, therefore, does not know what kind of measurement data 200 (e.g., temperature, light, air pressure, etc.) is received from the unclassified sensor node SU.

The computer system 1000 further has a data storage component 1003, which stores a first database DB1 for storing the series of measurement data 200 received from the unclassified sensor node SU. In general, the first database DB1 logs all measurement data received from the sensor nodes of the sensor infrastructure 2000 and is also referred to as the history DB as mentioned before. The history DB stores the raw data received with the series of measurement data 200 together with a timestamp indicating when each measurement data was taken, the respective measurement value and some identification of the respective sensor node, which has taken the measurement. The time stamp can either be generated internally by the measuring sensor node itself or by an acquisition device probing the sensor or can be allocated by the computer system upon receipt of the respective measurement data. In the latter case a small delay between the measurement and the allocation of the time stamp may occur, dependent on the network latency of the respective sensor network. The sensor identification can be a unique identifier stored on the sensor node. It is also possible to identify the sensor by an IP or MAC address of the sensor node in the respective network.

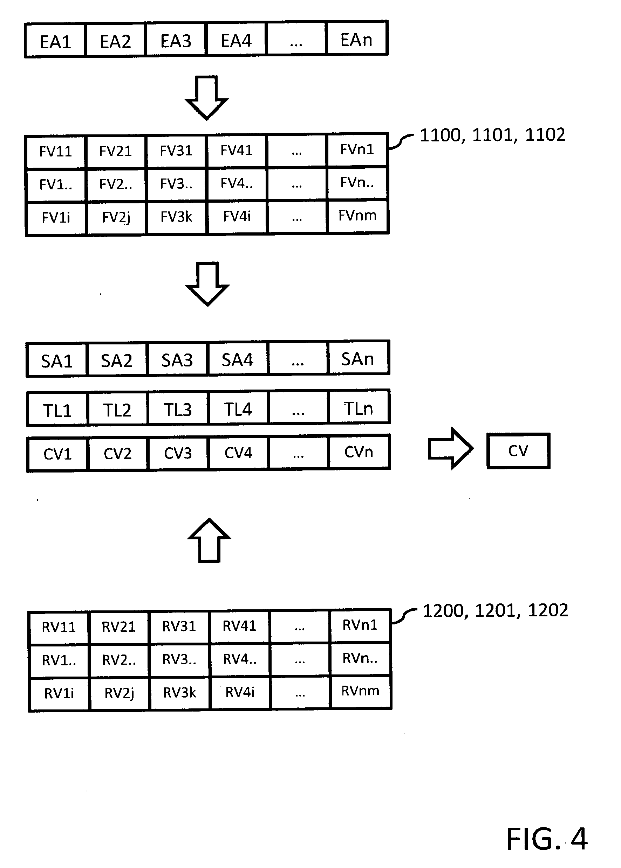

If the number of measurement data included in the received series of measurement data 200 is sufficient in numbers of samples an extractor component 1002 can extract a test pattern from the series of measurement data 200 in the history DB. For example, the extractor component 1002 can apply one or more algorithms to the series of measurement data 200, wherein each of the algorithms can calculate characteristic indicators of the series of measurement data. This is described in more detail under FIG. 4. The characteristic indicators will also be referred to as features of the measurement data. The application of an algorithm may lead to a single feature or to a vector of features. It is assumed that the characteristic indicators are somehow representative of the capabilities of the respective sensor node SU. For example, one algorithm may provide an average value over the past 24 hours providing a single value. Other algorithms may provide a feature vector, for example, resulting from a Fourier analysis of the frequency spectrum related to the series of measurement data 200 or even from the raw measurement data 200 itself.

Once the test pattern 1100 is extracted, the computer system needs to find out if the characteristic indicators of the unknown sensor node SU are similar to characteristics of known capabilities. For this purpose, the data storage component includes a second database DB2 with a plurality of reference patterns (e.g., 1200) corresponding to the various capability types which are used for classifying the sensor nodes of the sensor infrastructure 2000 in the infrastructure knowledge base 100. The capability type is characterizing the measurement features of a sensor node, such as temperature measurement, various gas measurements, light intensity measurements or the like. Therefore, the second database DB2 may also be referred to as feature DB. Predefined reference patterns can result from general models of the measurement behavior of sensor nodes being associated with a certain capability type. Reference patterns can also be based on measurement data from other sensor nodes with the same capability type, wherein this measurement data originate from a different location and a different time than the current series of measurement data 210 of the unknown sensor node SU. In the latter case the computer system 1000 is able to learn reference patterns over time based on measurement data provided by the various sensor nodes in the sensor infrastructure 2000.

The capability types of the sensor nodes can be distinguished into different categories. One category relates to time dependent features. That is, a sensor node shows a specific feature dependent on the time of the day. For example, every day the temperature in an office rises by four degrees because heating is switching from night mode to daylight mode. Another category relates to pattern based features. That is, a sensor node shows a specific pattern independent of the time of the day. An example is measurement data provided by an acceleration sensor which is always characteristic when a certain activity is performed. For example, the pattern of a walking person remains similar for repetitions of this activity, but may occur at different times of day. Reference patterns in the history DB can be classified according to those categories.

Further, the measurement data related to a certain capability type can also be distinguished into different data categories. For example, the data category can be binary in cases where a sensor node only delivers kind of on/off information (e.g., whether a light is switched on or switched off). The data category can also be continuous, which means that the measurement data varies continuously over time, such as for example the temperature data provided by a temperature sensor. Dependent on the data category of the measurement data different algorithms may be used for determining test patterns. This is explained in more detail under FIG. 4.

A classifier component 1005 can then determine a similarity measure for the extracted test pattern 1100 and anyone of the reference patterns in the feature DB. For this, the classifier component 1005 may include a similarity engine 1015. It may be advantageous to use different similarity algorithms for different features of the respective patterns. If for example, a test pattern includes multiple extracted feature vectors representing the characteristic indicators of the measurement data 200 in different forms, each feature vector may be compared to a corresponding feature vector of a reference pattern by the similarity algorithm, which best suits the respective vector. Some similarity algorithms are better for applying to binary data whereas other algorithms have advantages for continuous data. If the test pattern 1100 and a reference pattern 1200 used for a similarity measure determination include multiple feature vectors, then for each feature vector a similarity measure is determined by the respective similarity algorithm. The different similarity measures can then be weighted according to the reliability of the respective similarity algorithm. The similarity measure is also associated with a confidence value. For each similarity measure based on a corresponding similarity algorithm an associated confidence value is determined. The confidence value gives an estimate of the overall reliability of the respective similarity measure. For example, if the classifier component identifies the reference pattern 1200 to correlate with the test pattern 1100 and if the associated confidence value is above a predefined threshold, then the classifier component may come to the conclusion that the capability type of the unknown sensor node SU is likely to correspond to the capability type associated with the identified reference pattern 1200. The classifier component may then suggest this capability type for classifying the unclassified deployed sensor node SU. An aggregate confidence value can be determined by applying the reliability weighting for the respective similarity algorithms to the resulting individual confidence values.

In one embodiment the classifier component 1005 compares the confidence value with a threshold which is high enough to assess the classification in form of the suggested capability type as being correct. In this case, the classifier component can automatically accept the suggestion and initiate a corresponding update of the infrastructure knowledge base 100. That is, the unknown sensor node identification is added to the infrastructure knowledge base and the capability type associated with the identified reference pattern 1200 is assigned to the unknown sensor node SU. In other words, the previously unknown and unclassified deployed sensor node SU is now registered in the infrastructure knowledge base 100 and has a capability classification, which means that the computer system now knows what kind of measurement data were received in the series of measurement data 200 from the previously unclassified sensor.

In another embodiment the confidence value may not be high enough to automatically accept the suggestion for the capability type. This can be implemented by using a second threshold value which can be below the first threshold value. This means that the classifier component determined a correlation between the test pattern 1100 and the reference pattern 1200 but the correlation is not yet as reliable as in the previous embodiment. In this case the computer system may suggest the identified capability type to a user 1 (e.g., an operator of the system). This can be done through an appropriate user interface 1006. For example, the system can show to the user a plurality of suggested capability types based on correlations with multiple reference patterns on an appropriate output device such as a standard display means. The user can then accept or deny the suggested capability type or select a capability type out of a list of suggested capability types by using an appropriate input device of the user interface 1006 (e.g., touch screen, keyboard, mouse, etc.).

Once the suggested capability typed has been accepted and the infrastructure knowledge base has been updated accordingly, the test pattern 1100 of the previously unclassified sensor node SU can be added to the feature DB as a further reference pattern for the identified capability type.

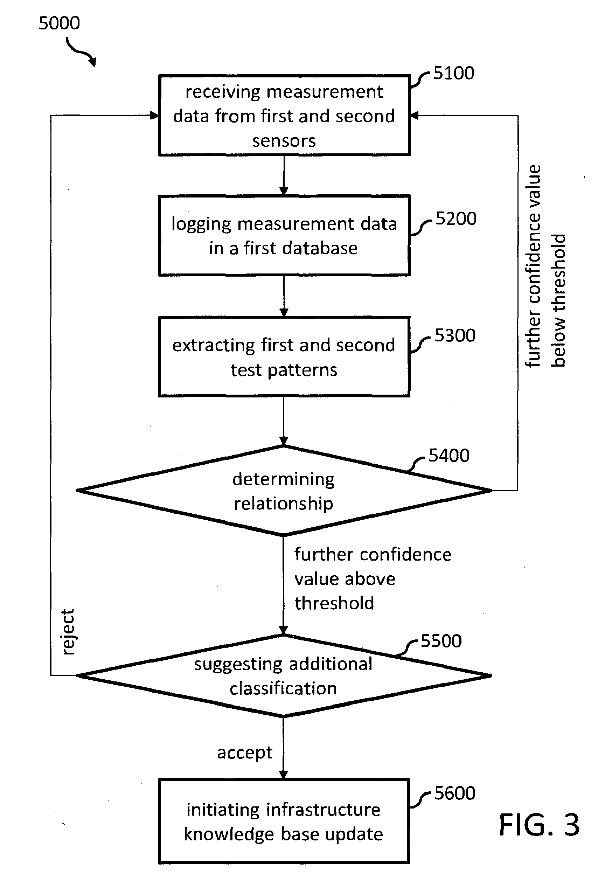

In an alternative embodiment of the computer system 1000 additional capability types of a sensor node can be discovered. The respective method is described in detail under FIG. 3 and is therefore only summarized at this point.

In the alternative embodiment the computer system receives a first and a second series of measurement data (210, 220) from first and second sensor nodes (S1, S2), respectively. Both sensor nodes are already known in the infrastructure knowledge base 100 and have a corresponding capability type. In the example, the first sensor node S1 is classified with a first capability type and the second sensor node S2 is classified with a second capability type, which is different from the first capability type. Both series of measurement data are logged in the history DB (DB1) of the computer system 1000.

The extractor component 1002 can now extract a first test pattern 1101 from the first series of measurement data 210 and a second test pattern 1102 from the second series of measurement data 220 by using the same algorithms as in the previously described embodiment. However, in the alternative embodiment the extracted test patterns are not compared with reference patterns from the feature DB but rather compared to each other. It can happen that two sensor nodes having two different capability types may still show a certain similarity in their measurement data because events influencing the measurement data of the first sensor node may somehow be related to events influencing the measurement data of the second sensor node as well. For example, the first sensor node measures light and temperature in a room and the second sensor node is a microphone which measures the loudness (or noise) in that room. People in a room usually light up and heat the room, but also increase noise.. Other examples may include CO₂ or O₂ sensors. Typically these are negatively correlated. That is, when something is burning the CO₂ concentration goes up while the O₂ concentration goes down. A further example is barometric sensors and CO₂ and O₂ sensors. Barometric sensors can also correlate with binary switch sensors mounted on doors. Typically opening a door causes airflow which affects the pressure on room level.

In the alternative embodiment it is advantageous when the two test patterns originate from measurement data which are taken during at least overlapping time intervals and the two sensor nodes are located in close neighborhood. The classifier component can then determine a potential relationship or dependency between the first sensor node S1 and the second sensor node S2 by a similarity measure comparison of the first test pattern 1101 with the second test pattern 1102. The same similarity algorithms can be applied as in the previously described embodiment, when a test pattern was compared to a reference pattern. The only difference in the alternative embodiment is that the second test pattern replaces the reference pattern. And that capability types are already associated with the respective test patterns because the sensor nodes are already classified in the infrastructure knowledge base. In case a relationship exists between the first and second sensor nodes S1, S2, the determined similarity measure is again associated with a confidence value giving an indication of the reliability of the identified relationship or dependency.

In this embodiment the classifier component may come to the conclusion that actually the second sensor node could also fulfill - to some extent - the capability of the first sensor node because the characteristic indicators in the first series of measurement data 210 are correlated with those in the second series of measurement data 220. In other words, a light sensor showing correlation with a temperature sensor in the same room may replace the temperature sensor in case of failure and may even be used for temperature control. The classifier component can then suggest the first capability type as an additional classification of the second sensor node S2 (or vice versa) if the confidence value is above a predefined threshold value. Finally it may initiate an update of the infrastructure knowledge base 100 to add the first capability type as the additional classification of the second sensor node S2 if the suggested first capability type is accepted.

The computer system may then add the first test pattern to the feature DB and store it as reference pattern for the second capability type. The feature DB already stores a first reference pattern for the first capability type and a second reference pattern for the second capability type. Such a new reference pattern may be tagged as relationship reference pattern because it does not classify a sensor in absolute terms with regards to its measurement capabilities. It only provides a secondary classification which makes sense in given configuration of the sensor infrastructure. It can be useful in Smart Building scenarios where perhaps many similarly equipped rooms exist and need to be controlled. In such cases, the same combination of sensor nodes with different native measurement capabilities may be repeated in many rooms of the building an therefore test pattern extending the classification of sensors in such scenarios can certainly help to better control the Smart Building and use capability redundancies in the case or sensor node failures.

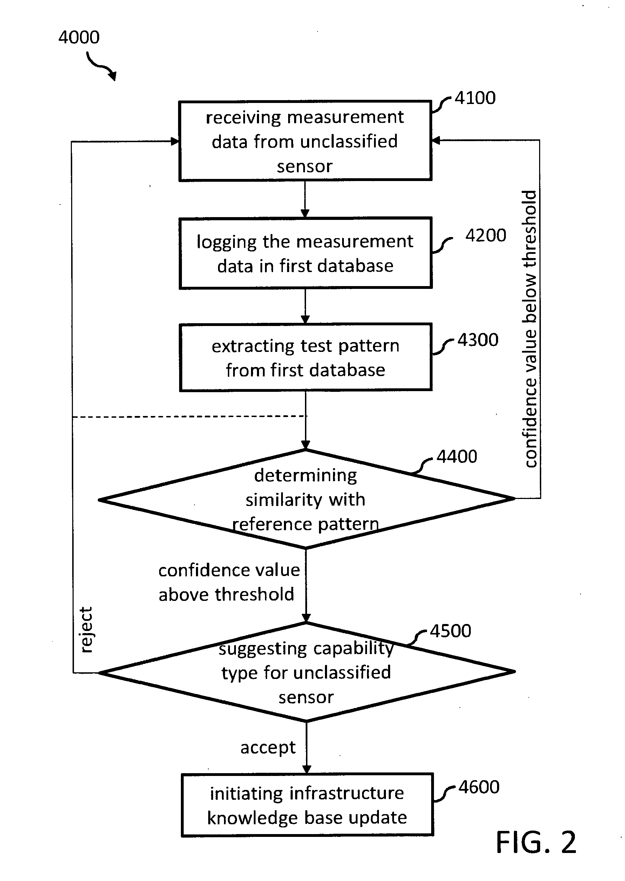

FIG. 2 is a flowchart of a computer implemented method 4000 according to one embodiment of the invention. The computer implemented method 4000, which can be executed by the computer system described under FIG. 1, includes receiving 4100 from asensor node a series of measurement data, wherein the sensor node is unknown in an infrastructure knowledge base; logging 4200 the series of measurement data in a first database; extracting 4300 a test pattern from the series of measurement data from the first database; determining 4400 a similarity measure for the test pattern and a predefined reference pattern stored in a second database DB2, wherein the reference pattern classifies a capability type, and wherein the similarity measure is associated with a confidence value; suggesting 4500 the capability type for classifying the sensor node if the confidence value is above a predefined threshold value; and initiating 4600 an update of the infrastructure knowledge base to register the previously unknown sensor node with the suggested capability type if the suggested capability type is accepted.

The various parts of the method will now be described in more detail by way of an example. In the receiving 4100 part the computer system receives raw data of a sensor node which has not been registered before. This may be due to a recent deployment of the sensor in the sensor infrastructure which provides measurement data to the computer system. For example, a new motion detector has been deployed in an office room of a Smart Building. A motion detector may be able to measure infrared radiation and detect if anybody is moving in the office. For example, if outside normal office hours a movement is detected it may create an alert for an operator. Assuming that the normal office hours are between 8 am and 6 pm during normal working days. House cleaning usually starts at 5 am and goes on until 7 am. A security guard normally passes by around 11 pm and 3 am. The motion sensor will typically deliver a series of measurement data over 24 hours.

Table 1 shows a condensed view on the measurement data. The sensor node identifier column includes some information SU-ID which communicates to the computer system from which sensor node the measurement data originate. This information can be a sensor ID or an IP/MAC address of the sensor in the sensor infrastructure. The time column shows the 24 hours of the day where the respective time is always to be seen as the start time of a one hour interval up to the start time in the next row. That is, the row starting at midnight 00:00 aggregates all detections between midnight and 01:00 (1 am). The event detections column shows the number of motion detections in the respective time interval. The event column is just for explanatory purpose and is not part of the measurement data. It is used herein to indicate the origin of the events

**Table 1**

| sensor node identifier | time | event detections | event |
|---|---|---|---|
| SU-ID | 00:00 | | |
| SU-ID | 01:00 | | |
| SU-ID | 02:00 | 1 | security guard passing by |
| SU-ID | 03:00 | | |
| SU-ID | 04:00 | | |
| SU-ID | 05:00 | 1 | cleaning personnel |
| SU-ID | 06:00 | 2 | cleaning personnel |
| SU-ID | 07:00 | 1 | staff arriving |
| SU-ID | 08:00 | 10 | staff arriving |
| SU-ID | 09:00 | 3 | staff arriving |
| SU-ID | 10:00 | 2 | accidental movements |
| SU-ID | 11:00 | 4 | staff going for lunch |
| SU-ID | 12:00 | 6 | staff going for lunch |
| SU-ID | 13:00 | 2 | staff going for lunch |
| SU-ID | 14:00 | 3 | accidental movements |
| SU-ID | 15:00 | 7 | accidental movements |
| SU-ID | 16:00 | 2 | accidental movements |
| SU-ID | 17:00 | | |
| SU-ID | 18:00 | 13 | staff leaving |
| SU-ID | 19:00 | 1 | staff leaving |
| SU-ID | 20:00 | | |
| SU-ID | 21:00 | | |
| SU-ID | 22:00 | | |
| SU-ID | 23:00 | 2 | security guard passing by |

The series of measurement data is then logged 4200 in the first database - the history DB. The logging can occur in a data structure similar to table 1 (disregarding the event column) but any other format which is appropriate can be used as well. The history DB can be any conventional database, such as a relational database, an in-memory database or an object oriented database.

The extractor component can then extract 4300 a test pattern from the series of measurement data from the history DB. A simple approach can be to extract the most basic characteristics from a sensor signal like the average, maximum, minimum and the standard deviation. For a time dependent approach, the measurement data for example can be gathered from 24 hour time intervals or any other appropriate time interval. A more fine- or coarse-grained consideration, e.g. considering 1hour or 1 minute, intervals may also be useful in some use cases. For example, for pattern based measurement data, one can define a time window and calculate the average, max/min/deviation, etc. values for this time window and slide it over the signal. This approach is called sliding window. Then, the system can determine which of the gathered window data is relevant, e.g. which deviates from the rest of the windows, and store this data as pattern in the Feature DB. That is, feature vectors can be calculated for targeted timeslots in case of time dependent data or extracted with the sliding window approach in case of pattern-based data.

In the above example, besides the using the raw data itself as the test pattern, various extraction algorithms could be applied to the series of measurement data. For example, a feature vector FV of average values for each six-hour internval of a day could be calculated resulting in FV1 (1/3, 11/3, 10/3, 8/3). In this context a day has four six-hour intervals, the first interval corresponding to [0:00, 5:00] and the last interval corresponding from [18:00, 23:00]. This vector can be considered as a representative pattern of the detected movements. Another feature vector which could be extracted may include the maximum number of detections per hour for each of the four six-hour intervals. This would result in the above example in FV2(1, 10, 7, 13). One could also apply a Power Spectrum Density Fourier Analysis or a Wavelets/Short-Time Fourier transformation to the series of measurement data to analyze the frequency spectrum of the series. The results can be feature vectors like FV3(f1, f2, ..., fn) including the identified frequencies. Any feature vector, which is extracted from the series of measurement data, is somehow characteristic for the measurement behavior of the newly deployed motion sensor. It is to be noted that a feature vector can also have only a single element. In this case only a single value (e.g., an average value or a maximum of the data series) is considered to be the characteristic indicator for the whole series of measurement data and therefore for the respective sensor node. The feature vectors are further detailed under FIG. 4.

In more general terms, selecting an appropriate combination of extraction and similarity algorithm depends on the data category of the received series of measurement data. If the data category is continuous data, appropriate combinations may be selected from:
- Calculating similarity from basic characteristics of the series of measurement data (using Mahalanobis or Euclidean Distance), e.g., based on characteristics like averages, maximum or minimum values, etc.;
- Calculating similarity using Dynamic Time Warping (DTW) from a feature vector representing a time series (actual sensor measurement time series, time series of averages in subsequent intervals;
- Comparing global frequency spectra (using Euclidean Distance), based on power spectrum density coefficient as a feature vector (Fourier Analysis); or
- Comparing local frequency spectrogram (e.g. using Euclidean Distance), e.g. using Wavelets/Short-Time Fourier transform as a feature vector.

If the data category is binary data, appropriate similarity algorithms are:
- Hamming Distance for binary time series of measurements;
- Fuzzy Hamming Distance for binary time series of measurements;
- Anderberg Distance for binary time series of measurements;
- Kulzinsky Distance for binary time series of measurements; or
- Jaccard-Needham Distance for binary time series of measurements.

Once the feature vectors have been extracted from the series of measurement data to form the test pattern, the classifier component tries to match the extracted test pattern with reference patterns from a second database - the feature DB. The feature DB stores a plurality of predefined reference patterns, where each reference pattern is associated with a capability type. In other words, each reference pattern includes one or more feature vectors, which are considered to be characteristic indicators for a respective capability type of sensor nodes. That is, they describe the measurement capabilities of one or more sensors in the sensor infrastructure or by way of generic sensor behavior patterns. Typically, a reference pattern is based on data originating from a different location and a different time than the series of measurement data. Each sensor node being registered in the infrastructure knowledge base is classified with at least one capability type which corresponds to a reference pattern. The reference patterns are of similar structure as the extracted test pattern. The classifier component can then determine a similarity measure by comparing the test pattern 1100 with a reference pattern stored in the feature DB using a similarity algorithm. It may be a similarity algorithm is better suitable for one feature vector than for another, dependent on the data category of the respective measurement data.

Therefore, the classifier component can select a best match similarity algorithm dependent on the data category of the series of measurement data. Selection may be performed by defining a criterion for checking properties of the measurement data, such as the range of values, sampling frequency and regularity. A criterion can then be for example a threshold: if the signal contains more than N unique values, the data is considered to be continuous. For example, if the data category of the measurement data is binary data then a similarity algorithm may be selected from the group of Hamming Distance, Fuzzy Hamming Distance, Anderberg Distance, Kulzinsky Distance, Jaccard-Needham Distance or any other similarity algorithm which is appropriate to assess the distance of binary measurement data series. If the data category is continuous data then algorithms like Dynamic Time Warping (DTW) or Spectral Coherence or other appropriate similarity algorithms may be used. For example, DTW is a method that allows a computer to find an optimal match between two given sequences (e.g. time series) with certain restrictions. The sequences are "warped" non-linearly in the time dimension to determine a measure of their similarity independent of certain non-linear variations in the time dimension. This sequence alignment method is often used in the context of hidden Markov models. One example of the restrictions imposed on the matching of the sequences is on the monotonicity of the mapping in the time dimension. Continuity is less important in DTW than in other pattern matching algorithms; DTW is an algorithm particularly suited to matching sequences with missing information, provided there are long enough segments for matching to occur. If such conditions are fulfilled with regards to the respective feature vector, then the classifier may select the DTW algorithm as the best match similarity algorithm for the respective feature vector comparison.

The classifier can then calculate a similarity measure for each feature vector of the test pattern with the corresponding reference pattern by applying an appropriate similarity algorithm. Each similarity measure is associated with a confidence value providing information about the reliability of the dependency between the test pattern and the reference patterns. The confidence value gives an estimate for how reliable the match of the test pattern with the respective reference pattern can be seen which corresponds to the reliability of the classification of the unknown sensor with the capability type associated with the reference pattern. For determining the confidence value for a similarity measure, a mathematical transformation is specified (e.g. linear transformation or a more informative non-linear mapping function) that normalizes the similarity measure to a confidence value between 0 and 1. If no similarity can be determined the computer system can simply wait for a further series of measurement data from the unclassified sensor node (motion sensor).

Once the classifier has determined a similarity between the test pattern and a reference pattern it suggests the respective capability type for classifying the unclassified sensor node if the confidence value is above a predefined threshold value. Referring back to the example of table 1, a reference pattern may exist in the feature DB which is associated with the capability type motion detection. If the various feature vectors of the test pattern match to a certain extent the feature vectors of this test pattern then a similarity measure will be determined by the respective similarity algorithms. For example, given the sequence of motion detections in table 1, DTW can be used to match such sequences against the motion detections of another motion sensor. The resulting confidence value will indicate a high correlation, if the test pattern was created from a series of measurement data from a similar motion sensor mounted in another office with similar office hours. The predefined threshold value for the confidence value may be chosen relatively high in case the classifier is supposed to accept the suggested capability type automatically without user interaction. For example, if a similarity is detected with a confidence value greater or equal 90% then the classifier may automatically accept the suggested capability type and initiate and update of the infrastructure knowledge base to register the previously unclassified sensor node with the suggested capability type. That is, the previously unknown motion sensor is now known as sensor node of the sensor infrastructure which has the capabilities of a motion sensor.

In case the confidence value is below this predefined threshold value but still above a further predefined threshold, which is lower than the first one (e.g., above 60%), the classifier may request a user decision with regards to the acceptance of the suggested capability type. For example, if the reference pattern is originally based on measurement data of a motion sensor in an office which is occupied by fewer employees than the office where the new motion sensor has been deployed, there may be a relatively low correlation with regards to the feature vectors base on average number of detections because the office with fewer employees is likely to create fewer detections. However, if the opening hours are similar, the feature vectors including characteristic frequency spectra may show a high correlation. Dependent on the associated confidence values the classifier can now present the results to a user (e.g., system operator) through appropriate user interface means and ask explicitly for acceptance of the suggested capability type. This way, the classifier can even suggest multiple options to the user in case it determined correlations with multiple reference patterns. That is, if the deployed motion sensor would show a similar behavior as for example a reference pattern associated with a light sensor and if the classifier would determine a correlation of the test pattern with the two respective reference patterns then the classifier could suggest to the user the options light detection or motion detection together with the respective confidence values for the capability type of the newly deployed sensor node.

The user can then accept the suggested capability type or select a capability type form a list of suggested capability types by sending an acceptance indicator to the classifier. This can be done through a standard user interaction with the user interface. For example, the user can simply confirm the suggested capability type by pushing an OK button on a touch screen or by pressing the return key of a keyboard. In the case of list of possible capability types the user may select one or more of the suggested capability types for example by checking corresponding check marks in a selection table on a respective graphical user interface or use voice control to indicate the options to accepted. Assuming that in the example the user only accepts the motion detection capability type, the classifier can then initiate the update of the infrastructure knowledge base in the same way as in the case of automatic acceptance. In case the user rejects the suggestion, the computer system may either continue to search for further reference patterns and trying to identify further correlations or the system may simply wait for receiving further measurement data from the yet still unknown and unclassified sensor node.

An advantage of the described embodiment is therefore, that a previously unknown and unclassified sensor node, which has been newly deployed into the sensor infrastructure, is discovered by the computer system and can automatically or semi-automatically be classified according to its measurement capabilities and finally be registered in the infrastructure knowledge base. This enables the computer system to use the additional knowledge about the newly deployed sensor for future discovery and classification of further to be deployed sensor nodes. Further, the tedious and error prone process of manual registration of newly deployed sensors is improved by using reliable similarity algorithms to identify a newly deployed sensor and classify it accordingly to make it usable within the sensor infrastructure with low or even no manual effort.

FIG. 3 is a flowchart of a computer implemented method 5000 according to an alternative embodiment of the invention. The alternative embodiment is quite similar to the previously described embodiment of a computer implemented method according to the invention. The main differences of the two embodiments are that the second embodiment uses a second test pattern instead of reference patterns for determining similarity and that the sensor nodes providing the series of measurement data used for the test pattern extraction are already known and classified in the infrastructure knowledge base. Therefore, the advantage of this alternative embodiment is to identify additional capabilities of already registered and classified sensors which helps for example in case of sensor failure to identify a potential substitute of the failed sensor by looking up neighboring sensor nodes with the same capability type as the failed sensor. In the example of a Smart Building specific control actions, such as temperature control or automatic room locking may still be possible even in case a sensor fails. If another sensor which has the same capability perhaps as a secondary capability can still provide measurement data, which is good enough to be used as input for the control actions, this other sensor may be used for the control purpose as a backup solution until the broken sensor gets replaced.

The alternative method 5000 for sensor classification starts with receiving 5100 from a first sensor node a first series of measurement data and from a second sensor node a second series of measurement data. The first sensor node is already classified in the infrastructure knowledge base with a first capability type and the second sensor node is classified with a second capability type which is different from the first capability type. The history DB then logs 5200 the first series of measurement data and the second series of measurement data. The extractor component can then extract 5300 from the history DB a first test pattern from the first series of measurement data and a second test pattern from the second series of measurement data. In this embodiment, the classifier determines 5400 a relationship between the first sensor node and the second sensor node by a similarity measure for the first test pattern and the second test pattern. The similarity measure is associated with a confidence value. If the confidence value is above a predefined threshold value the classifier suggests 5500 the first capability type as an additional classification of the second sensor node and initiates 5600 an update of the infrastructure knowledge base to add the first capability type as the additional classification of the second sensor node if the suggested first capability type is accepted. Optionally, the computer system can add 5700 the first test pattern as a reference pattern for the second capability type to the feature DB, which already stores a first reference pattern for the first capability type and a second reference pattern for the second capability type.

Referring back to table 1 of the example under FIG. 3 it is assumed that the first sensor node now corresponds to the motion sensor which is now classified in the infrastructure knowledge base and has the capability type motion detection. We assume further that the second sensor node is a temperature sensor being mounted in the same office as the motion sensor. The temperature sensor is registered in the infrastructure knowledge base with the capability type temperature measurement and is used to control the heating in the office in such a way that it keeps a convenient constant temperature of 22°C during office hours and a lower temperature of 16°C during the rest of the day to save energy. Table 2 shows a possible series of measurement data of the temperature when operating normally. In the event column there are still the events listed form the motion sensor example but in addition there are control events (*in italics*) which initiate heat regulation.

**Table 2**

| sensor node identifier | time | temperature in °C | event |
|---|---|---|---|
| TS-ID | 00:00 | 16 | |
| TS-ID | 01:00 | 16 | |
| TS-ID | 02:00 | 16 | security guard passing by |
| TS-ID | 03:00 | 16 | |
| TS-ID | 04:00 | 16 | *start heating* |
| TS-ID | 05:00 | 17 | cleaning personnel |
| TS-ID | 06:00 | 19 | cleaning personnel; *reduce heating* |
| TS-ID | 07:00 | 21 | staff arriving |
| TS-ID | 08:00 | 22 | staff arriving |
| TS-ID | 09:00 | 23 | staff arriving; *stop heating* |
| TS-ID | 10:00 | 24 | accidental movements |
| TS-ID | 11:00 | 23 | staff going for lunch |
| TS-ID | 12:00 | 22 | staff going for lunch |
| TS-ID | 13:00 | 21 | staff going for lunch; *start reduced heating* |
| TS-ID | 14:00 | 22 | accidental movements |
| TS-ID | 15:00 | 22 | accidental movements |
| TS-ID | 16:00 | 22 | accidental movements |
| TS-ID | 17:00 | 22 | |
| TS-ID | 18:00 | 22 | staff leaving |
| TS-ID | 19:00 | 21 | staff leaving; *stop heating* |
| TS-ID | 20:00 | 19 | |
| TS-ID | 21:00 | 17 | |
| TS-ID | 22:00 | 16 | |
| TS-ID | 23:00 | 16 | security guard passing by |

When extracting feature vectors for the second sensor (temperature sensor according to the same mechanisms as used for the motion sensor, the feature vector with average values for each six-hour interval of the day can be calculated resulting in FV1'(16.2 , 22, 21.8, 18.5). This vector can be considered as a representative pattern of the detected temperature values. Another feature vector which could be extracted may include the highest or lowest temperature value per hour for the six hour intervals. This would result in the above example for the maximum values in FV2'(17, 24, 22, 22) and for the minimum values in FV2"(16, 19, 21, 16). One could also apply a Power Spectrum Density Fourier Analysis or a Wavelets/Short-Time Fourier transformation to the series of temperature measurement data to analyze the frequency spectrum of the series. The results can be feature vectors like FV3'(f1', f2', ..., fn').

The classifier then determines if there is some relationship or dependency between the first sensor node (motion sensor) and the second sensor node (temperature sensor) by calculating a similarity measure between the first test pattern and the second test pattern. In the example appropriate similarity algorithms can be used for comparing the different feature vectors of the respective test patterns. For example, FV1 (1/3, 11/3, 10/3, 8/3) is compared with FV1'(16.2 , 22, 21.8, 18.5), FV2(1, 10, 7, 13) is compared with FV2'(17, 24, 22, 22), and FV3(f1, f2, ..., fn) is compared with FV3'(f1', f2', ..., fn'). For each of these pairs, a similarity measure can be determined which is then associated with a corresponding confidence value. For example, comparing FV1 and FV1' might result in a confidence value of 0.5 whereas the similarity of FV3 and FV3' has a confidence value of 0.7. The different confidence values may be weighted according to trust level values of the corresponding similarity algorithm as explained further under FIG. 4. The weighted confidence values can then result in an aggregate confidence value for the similarity of the first and second test pattern. However the associated confidence value may me too low to automatically accept a suggestion to classify the motion sensor also with the capability type temperature measurement or vice versa the temperature sensor with the capability motion detection. The suggestion may be made to the operator of the system, who can then accept or reject the suggestion for an additional classification. In the example, the operator may accept a further classification of the motion sensor with the capability type temperature measurement because in view of the actual measurement behavior the motion sensor could probably also be used to control the heating in the office. There is some correlation between the start and reduction of the heating power and the event of the cleaning personnel. Also the heating stops around the time when all employees have arrived and is restarted in a reduced mode when people go to lunch. I finally stops for the day when everybody has left the office. Therefore, the correlation indicates that the measurement data provided by the motion sensor can deliver useful information to keep the temperature at the convenient level need during working hours and have it switched to energy saving mode otherwise. The motion sensor could therefore serve as a backup solution for the temperature sensor for controlling the temperature in the office.

If the operator accepts this suggestion of the classifier in case the associated confidence value is somehow reasonable (that is, above the predefined threshold value for suggestions to a user), then the classifier can initiate an update of the infrastructure knowledge base to add the temperature measurement capability type as an additional classification of the motion sensor. The motion sensor test pattern may then be added as a reference pattern for the temperature measurement capability type to the feature DB. Besides the reference pattern for the temperature capability type which is based on the measurement data of the temperature sensor the feature DB would then include a further reference pattern for the same capability type but being associated with a different type of sensor.

FIG. 4 illustrates a weighted ranking mechanism for the confidence value CV. EA1 to EAn illustrated different extraction algorithms, such as the ones explained in the previous description, which can be used to extract characteristic feature vectors FV from series of measurement data being stored in the history DB. Applying the extraction algorithms to the series of measurement data results in a respective feature value FV1 to FVn for each extraction algorithm. The plurality of feature vectors resulting from a feature extraction related to a specific series of measurement data is referred to as a test pattern, 1100, 1101, 1102 for the respective series of measurement data. Each feature vector of a test pattern 1100, 1101, 1102 can be seen as a characteristic indicator for the capability types of the respective sensor nodes SU, S1. S2 (cf. FIG.1) which have sent the measurement data to the computer system. Each feature vector FV1 to FVn can have a different number of elements depending on the extraction algorithm being used. For example, FV1 can have elements FV11 to FV1i and FV2 can have elemts FV21 to FV2j where i # j. The number of elements of a feature vector can also be 1.

In the feature DB the computer system can store reference patters 1200, 1201, 1202. Each reference pattern is associated with a capability type characterized by feature vectors RV1 to RVn, each feature vector being a characteristic indicator of a measurement capability of a respective sensor node. Advantageously the feature vectors RV1 to RVn of the reference patterns have a structure which is comparable to those feature vectors FV1 to FVn of the test patterns. The feature vectors of test and reference patterns may have the same structure in case they are generated by the same extraction algorithms.

The classifier can then use a plurality of similarity algorithms SA1 to SAn to calculate a confidence value CV1 to CVn for the similarity between a test pattern 1100 and a reference pattern 1200 for each pair of feature vectors (FV1,RV1) to (FVn,RVn), respectively. The classifier can select a set of similarity measures based on the data category of the measurements (i.e. continuous vs. binary data) as described earlier. Each similarity algorithm SA1 to SAn can be associated with a trust level TL1 to TLn, respectively. The trust level indicates a reliability ranking of the various similarity algorithms with regards to the calculated similarity measures. Typically each similarity algorithm will deliver a different similarity measure when a specific test pattern is compared with a specific reference pattern because the underlying compared feature vectors can be based on quite different extraction mechanisms which again represent different characteristic of the same sensor signal. Some similarity algorithms may always be better than others. This can be reflected in corresponding trust levels.

Not every similarity algorithm may be appropriate under certain circumstances. This may even vary for different capability types. That is, in one embodiment there may be a trust level vector for each reference pattern to take into account that a specific similarity algorithm works well for a motion sensor but not for a light or temperature sensor. One advantage in using trust levels for a plurality of similarity algorithms instead of always using the similarity algorithm providing the best confidence value is that the result of the best similarity algorithm can somehow be validated by the weaker similarity algorithms. If for example one similarity algorithm provides a confidence value of 85% but all other similarity algorithms provide confidence values of below 5% this may be an indicator that the algorithm with the high confidence value actually provides a false result which should be ignored. For example, a user can then reject the suggested result by rejecting the associated suggestion and may reconfigure the trust level for the respective algorithm. In some cases such a reconfiguration of trust levels may even be done automatically by the system. In this case the system has rules which allow learning the reliability of certain similarity algorithms over time. For example, when setting the trust level to 0 the respective similarity algorithm may be completely ignored for the respective capability type. That is, when the associated reference pattern is used the next time in a correlation with a test pattern, the similarity algorithm with the reconfigured trust level of 0 will not be used anymore.

The classifier can also calculate an aggregate confidence value CV as a result of the comparison of the test pattern 1100 with the reference pattern 1200. This may be done, for example, by using a weighted average of the various confidence values CV1 to CVn associated with the respective feature vector pairs. The weighting can be derived from the trust levels of the various similarity algorithms by for example normalizing the trust levels in a way that sum up to 100% and each confidence value CVi is weighted with the respective percentage of its associated trust level TLi.

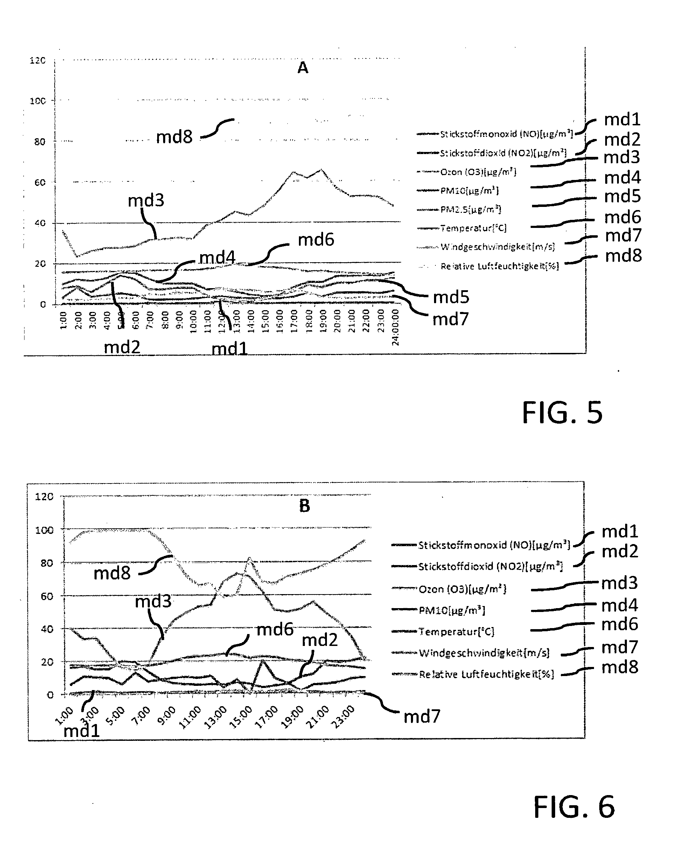

FIGs. 5 to 7 show real environmental measurement data of different sensor nodes. The measurement data is randomly chosen from three different measurement stations in three different cities A, B and C and were made publicly available from the Hessisches Landesamt für Umwelt und Geologie: Luftmessdaten. The measurement data are flagged with the corresponding capability types md0 to md8 of the respective sensor nodes. Data that is presented in the examples was taken from an environmental agency run by the state of Hessen, in Germany.

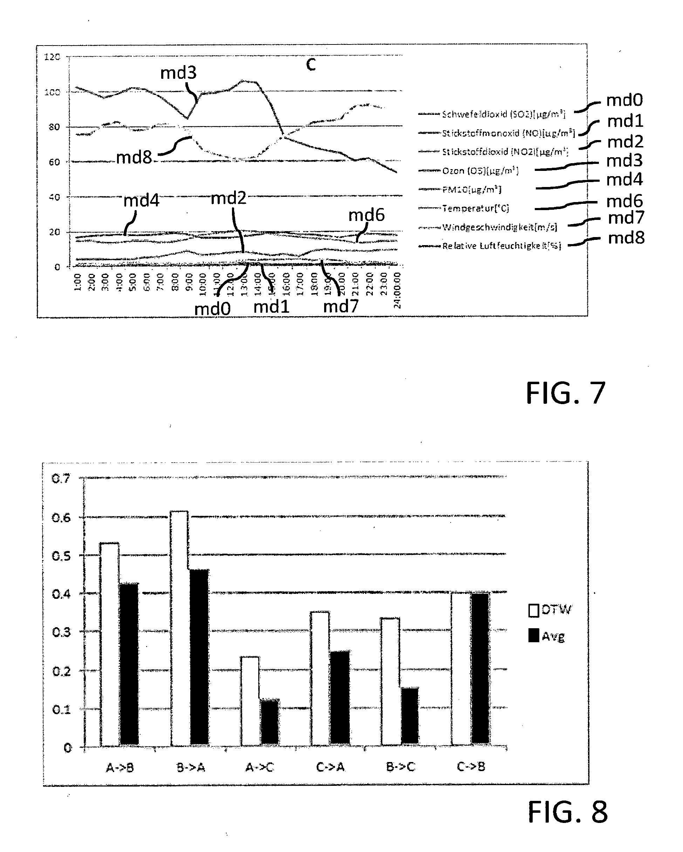

FIG. 8 shows similarity/correlation results of the environmental sensor nodes for two possible algorithms: DTW (left bars in the chart) and using the average data (abbreviated avg; right bars in the chart). First, the extractor 1002 (cf. FIG. 1) extracts features, which correspond to a test pattern. In the example of using DTW, we use the time series of raw measurement data as feature vector, instead of a calculated feature vector. The classifier 1005 can then use DTW for similarity/correlation estimation. Each feature vector of the unknown/unclassified test pattern is compared to all reference patterns 1200 of DB2. Then the test pattern is assigned to a capability type associated with a reference pattern that has the highest similarity/correlation. In the second approach, one can calculate the average value of the time series as feature vector. Similarity is calculated by comparing the differences of the average values. Again, the test pattern is assigned to the capability type of the reference pattern with the highest similarity, respectively the lowest distance.

The chart shows the average F₁-measure for the data. The F₁-measure is an aggregated value of precision p and recall r with F₁=2pr/(p+r). Precision thereby refers to the number of correct results (i.e. correct assignments of capabilities) divided by the number of all returned results. Recall refers to the number of correct results divided by the number of results that should have been returned.. The higher this F₁-measure, the better the classification result. A-> B means that the capability types were eliminated for all measurement data originating in A and were classified with capability types known from the measurement originating in B. That is, test patterns were extracted from the measurement data from A and the patterns extracted from the measurement data from B were used as reference patterns. The results show already a good correlation although environmental data is not very characteristic in contrast to data expected in Smart Buildings.

The used algorithms were not tuned in any aspect and only few data were used for the classification. Some measurements like air pressure were eliminated from FIGS. 5 to 7 to allow representing all measurements on a common scale. Classifying the measurement data based on the given data is difficult for a human because there are dependencies which cannot necessarily be seen. The suggested capability types correspond to a classification of the sensor nodes which is far above an accidental capability assignment, where the accuracy would be below 13%. The probability distribution results from the chart in FIG. 6 may then be presented to the user through the user interface 1006 for the suggested capability types and the user can finally make a decision Based on the presented classification, respectively, probability distribution in 1006, the user can then make the decision in the semi-automated embodiment of the invention.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program of claim 10, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The method described under FIG. 2 can all be executed by corresponding computer products on the respective devices, e.g., the non-trusted server, data producer client computers and the data consumer client computers.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

## Claims

1. A computer implemented method (4000) for sensor classification comprising:
receiving (4100) from a sensor node (SU) a series of measurement data (200), wherein the sensor node (SU) is unknown in an infrastructure knowledge base (100);
logging (4200) the series of measurement data (200) in a first database (DB1);
extracting (4300) a test pattern (1100) from the series of measurement data (200) from the first database (DB1);
determining (4400) a similarity measure for the test pattern (1100) and a predefined reference pattern (1200) stored in a second database (DB2), wherein the reference pattern (1200) classifies a capability type, and wherein the similarity measure is associated with a confidence value (CV);
suggesting (4500) the capability type for classifying the sensor node (SU) if the confidence value (CV) is above a predefined threshold value; and
initiating (4600) an update of the infrastructure knowledge base (100) to register the previously unknown sensor node (SU) with the suggested capability type if the suggested capability type is accepted.

2. The method (4000) of claim 1, wherein determining further comprises:
selecting a best match similarity algorithm dependent on a data category of the series of measurement data.

3. The method (4000) of claim 2, wherein the data category is binary data or continuous data.

4. The method (4000) of anyone of the previous claims,
wherein suggesting (4500) further comprises:
presenting the capability type and the confidence value (CV) to a user; and
wherein initiating (4600) further comprises:
receiving an acceptance indicator from the user.

5. The method (4000) of claim 2, wherein the best match similarity algorithm has an individual trust level assigned and the respective algorithm is weighted based on the respective individual trust level.

6. The method (4000) of anyone of the previous claims, wherein the reference pattern (1200) is based on data originating from a different location and a different time than the series of measurement data (210).

7. The method (4000) of anyone of the previous claims, wherein the test pattern (1100) and the reference pattern (1200) comprise respective feature vectors, a feature vector having multiple vector elements, wherein the feature vector is associated with a corresponding similarity algorithm.

8. A computer implemented method (5000) for sensor classification comprising:
receiving (5100) from a first sensor node (S1) a first series of measurement data (210) and from a second sensor node (S2) a second series of measurement data (220), wherein in an infrastructure knowledge base (100) the first sensor node (S1) is classified with a first capability type and the second sensor node (S2) is classified with a second capability type being different from the first capability type;
logging (5200) the first series of measurement data (210) and the second series of measurement data (220) in a first database (DB1);
extracting (5300) from the first database (DB1) a first test pattern (1101) from the first series of measurement data (210) and a second test pattern (1102) from the second series of measurement data (220);
determining (5400) a relationship between the first sensor node (S1) and the second sensor node (S2) by a similarity measure for the first test pattern (1101) and the second test pattern (1102), wherein the similarity measure is associated with a confidence value;
suggesting (5500) the first capability type as an additional classification of the second sensor node (S2) if the confidence value is above a predefined threshold value; and
initiating (5600) an update of the infrastructure knowledge base (100) to add the first capability type as the additional classification of the second sensor node (S2) if the suggested first capability type is accepted.

9. The method of claim 8, further comprising:
adding (5700) to a second database (DB2) the first test pattern (1101) as a reference pattern (1201) for the second capability type, wherein the second database (DB2) already stores a first reference pattern for the first capability type and a second reference pattern for the second capability type.

10. A computer program product that when loaded into a memory of a computing device and executed by at least one processor of the computing device executes the steps of the computer implemented methods according to of anyone of the claims 1 to 9.

11. A computer system (1000) comprising:
an interface component (1001) configured to receive measurement data from a plurality of sensor nodes (S1, S2, S3, SU), wherein a deployed sensor node (SU) is unknown in an infrastructure knowledge base (100);
a data storage component (1003) configured to store a first database (DB1) for storing a series of measurement data (210) of the deployed sensor node (SU) and to store a second database (DB2) with a plurality of reference patterns (1200) classifying various capability types;
an extractor component (1002) configured to extract a test pattern (1100) from the series of measurement data (210) from the first database (DB1); and
a classifier component (1005) configured to determine a similarity measure for the test pattern (1100) and a reference pattern (1200), wherein the reference pattern (1200) classifies a capability type, and wherein the similarity measure is associated with a confidence value; and further configured to suggest the capability type for classifying the unknown deployed sensor node (SU) if the confidence value is above a predefined threshold value; and further configured to initiate an update of the infrastructure knowledge base (100) with the capability type of the previously unknown deployed sensor node (SU) if the suggested capability type is accepted.

12. The computer system of claim 11, wherein the classifier component is further configured to select a best match similarity algorithm dependent on a data category of the series of measurement data.

13. The computer system of claim 11 or 12, wherein a similarity algorithm which is used to determine the similarity measure is associated with at least one extraction algorithm so that the at least one extraction algorithm generates the test pattern being appropriate for the similarity algorithm.

14. The computer system of claims 11 to 13, wherein the test pattern includes a plurality of feature vectors, each feature vector being an appropriate input for at least one similarity algorithm.

15. A computer system (1000) comprising:
an interface component (1001) configured to receive from a first sensor node (S1) a first series of measurement data (210) and from a second sensor node (S2) a second series of measurement data (220), wherein the first sensor node (S1) is classified with a first capability type and the second sensor node (S2) is classified with a second capability type being different from the first capability type;
a data storage component (1003) configured to store a first database (DB1) for storing the received first and second series of measurement data (210, 220);
an extractor component (1002) configured to extract a first test pattern (1101) from the first series of measurement data (210) and a second test pattern (1102) from the second series of measurement data (220); and
a classifier component (1005) configured to determine a relationship between the first sensor node (S1) and the second sensor node (S2) by a similarity measure for the first test pattern (1101) and the second test pattern (1102), wherein the similarity measure is associated with a confidence value; further configured to suggest the first capability type as an additional classification of the second sensor node (S2) if the confidence value is above a predefined threshold value; and further configured to initiate an update of the infrastructure knowledge base (100) to add the first capability type as the additional classification of the second sensor node (S2) if the suggested first capability type is accepted.

## Patentansprüche

1. Computerimplementiertes Verfahren (4000) zur Sensorklassifizierung, das Folgendes beinhaltet:
Empfangen (4100), von einem Sensorknoten (SU), einer Reihe von Messdaten (200), wobei der Sensorknoten (SU) in einer Infrastrukturwissensbank (100) unbekannt ist;
Aufzeichnen (4200) der Reihe von Messdaten (200) in einer ersten Datenbank (DB1);
Extrahieren (4300) eines Testmusters (1100) aus der Reihe von Messdaten (200) aus der ersten Datenbank (DB1);
Bestimmen (4400) eines Ähnlichkeitsmaßes für das Testmuster (1100) und ein vordefiniertes Bezugsmuster (1200), das in einer zweiten Datenbank (DB2) gespeichert ist, wobei das Bezugsmuster (1200) einen Fähigkeitstyp klassifiziert, und wobei das Ähnlichkeitsmaß mit einem Vertrauenswert (CV) assoziiert ist;
Empfehlen (4500) des Fähigkeitstyps zum Klassifizieren des Sensorknotens (SU), falls der Vertrauenswert (CV) über einem vordefinierten Schwellenwert liegt; und
Initiieren (4600) einer Aktualisierung der Infrastrukturwissensbank (100), um den zuvor unbekannten Sensorknoten (SU) mit dem empfohlenen Fähigkeitstyp zu registrieren, falls der empfohlene Fähigkeitstyp akzeptiert wird.

2. Verfahren (4000) gemäß Anspruch 1, wobei das Bestimmen ferner Folgendes beinhaltet:
Auswählen eines am besten übereinstimmenden Ähnlichkeitsalgorithmus abhängig von einer Datenkategorie der Reihe von Messdaten.

3. Verfahren (4000) gemäß Anspruch 2, wobei die Datenkategorie binäre Daten oder kontinuierliche Daten ist.

4. Verfahren (4000) gemäß einem der vorhergehenden Ansprüche,
wobei das Empfehlen (4500) ferner Folgendes beinhaltet:
Präsentieren des Fähigkeitstyps und des Vertrauenswerts (CV) an einen Benutzer; und
wobei das Initiieren (4600) ferner Folgendes beinhaltet:
Empfangen eines Akzeptanzindikators vom Benutzer.

5. Verfahren (4000) gemäß Anspruch 2, wobei dem am besten übereinstimmenden Ähnlichkeitsalgorithmus ein individuelles Vertrauensniveau zugewiesen ist und der jeweilige Algorithmus basierend auf dem jeweiligen Vertrauensniveau gewichtet ist.

6. Verfahren (4000) gemäß einem der vorhergehenden Ansprüche, wobei das Bezugsmuster (1200) auf Daten basiert, die von einem anderen Ort und einer anderen Zeit als die Reihe von Messdaten (210) stammen.

7. Verfahren (4000) gemäß einem der vorhergehenden Ansprüche, wobei das Testmuster (1100) und das Bezugsmuster (1200) jeweilige Merkmalsvektoren beinhalten, wobei ein Merkmalsvektor mehrere Vektorelemente aufweist, wobei der Merkmalsvektor mit einem korrespondierenden Ähnlichkeitsalgorithmus assoziiert ist.

8. Computerimplementiertes Verfahren (5000) zur Sensorklassifizierung, das Folgendes beinhaltet:
Empfangen (5100), von einem ersten Sensorknoten (S1), einer ersten Reihe von Messdaten (210) und von einem zweiten Sensorknoten (S2) einer zweiten Reihe von Messdaten (220), wobei in einer Infrastrukturwissensbank (100) der erste Sensorknoten (S1) mit einem ersten Fähigkeitstyp klassifiziert ist und der zweite Sensorknoten (S2) mit einem zweiten Fähigkeitstyp assoziiert ist, der sich vom ersten Fähigkeitstyp unterscheidet;
Aufzeichnen (5200) der ersten Reihe von Messdaten (210) und der zweiten Reihe von Messdaten (220) in einer ersten Datenbank (DB1);
Extrahieren (5300), aus der ersten Datenbank (DB1), eines ersten Testmusters (1101) aus der ersten Reihe von Messdaten (210) und eines zweiten Testmusters (1102) aus der zweiten Reihe von Messdaten (220);
Bestimmen (5400) einer Beziehung zwischen dem ersten Sensorknoten (S1) und dem zweiten Sensorknoten (S2) durch ein Ähnlichkeitsmaß für das erste Testmuster (1101) und das zweite Testmuster (1102), wobei das Ähnlichkeitsmaß mit einem Vertrauenswert assoziiert ist;
Empfehlen (5500) des ersten Fähigkeitstyps als eine zusätzliche Klassifizierung des zweiten Sensorknotens (S2), falls der Vertrauenswert über einem vordefinierten Schwellenwert liegt; und
Initiieren (5600) einer Aktualisierung der Infrastrukturwissensbank (100), um den ersten Fähigkeitstyp als die zusätzliche Klassifizierung des zweiten Sensorknotens (S2) hinzuzufügen, falls der empfohlene erste Fähigkeitstyp akzeptiert wird.

9. Verfahren gemäß Anspruch 8, das ferner Folgendes beinhaltet:
Hinzufügen (5700), zu einer zweiten Datenbank (DB2), des ersten Testmusters (1101) als ein Bezugsmuster (1201) für den zweiten Fähigkeitstyp, wobei die zweite Datenbank (DB2) bereits ein erstes Bezugsmuster für den ersten Fähigkeitstyp und ein zweites Bezugsmuster für den zweiten Fähigkeitstyp speichert.

10. Computerprogrammprodukt, das, wenn es in einen Speicher einer Computervorrichtung geladen ist und durch mindestens einen Prozessor der Computervorrichtung ausgeführt wird, die Schritte des computerimplementierten Verfahrens gemäß einem der Ansprüche 1 bis 9 ausführt.

11. Computersystem (1000), das Folgendes beinhaltet:
eine Schnittstellenkomponente (1001), die konfiguriert ist, um Messdaten von einer Vielzahl von Sensorknoten (S1, S2, S3, SU) zu empfangen, wobei ein eingesetzter Sensorknoten (SU) in einer Infrastrukturwissensbank (100) unbekannt ist;
eine Datenspeicherungskomponente (1003), die konfiguriert ist, um eine erste Datenbank (DB1) zum Speichern einer Reihe von Messdaten (210) vom eingesetzten Sensorknoten (SU) zu speichern und eine zweite Datenbank (DB2) mit einer Vielzahl von Bezugsmustern (1200), die verschiedene Fähigkeitstypen klassifizieren, zu speichern;
eine Extraktorkomponente (1002), die konfiguriert ist, um ein Testmuster (1100) aus der Reihe von Messdaten (210) aus der ersten Datenbank (DB1) zu extrahieren; und
eine Klassifikatorkomponente (1005), die konfiguriert ist, um ein Ähnlichkeitsmaß für das Testmuster (1100) und ein Bezugsmuster (1200) zu bestimmen, wobei das Bezugsmuster (1200) einen Fähigkeitstyp klassifiziert, und wobei das Ähnlichkeitsmaß mit einem Vertrauenswert assoziiert ist; und ferner konfiguriert ist, um den Fähigkeitstyp zum Klassifizieren des unbekannten eingesetzten Sensorknotens (SU) zu empfehlen, falls der Vertrauenswert über einem vordefinierten Schwellenwert liegt; und ferner konfiguriert ist, um eine Aktualisierung der Infrastrukturwissensbank (100) mit dem Fähigkeitstyp des zuvor unbekannten eingesetzten Sensorknotens (SU) zu initiieren, falls der empfohlene Fähigkeitstyp akzeptiert wird.

12. Computersystem gemäß Anspruch 11, wobei die Klassifikatorkomponente ferner konfiguriert ist, um einen am besten übereinstimmenden Ähnlichkeitsalgorithmus abhängig von einer Datenkategorie der Reihe von Messdaten auszuwählen.

13. Computersystem gemäß Anspruch 11 oder 12, wobei ein Ähnlichkeitsalgorithmus, der verwendet wird, um das Ähnlichkeitsmaß zu bestimmen, mit mindestens einem Extraktionsalgorithmus assoziiert ist, so dass der mindestens eine Extraktionsalgorithmus das für den Ähnlichkeitsalgorithmus geeignete Testmuster generiert.

14. Computersystem gemäß Anspruch 11 bis 13, wobei das Testmuster eine Vielzahl von Merkmalsvektoren umfasst, wobei jeder Merkmalsvektor ein geeigneter Eingang für mindestens einen Ähnlichkeitsalgorithmus ist.

15. Computersystem (1000), das Folgendes beinhaltet:
eine Schnittstellenkomponente (1001), die konfiguriert ist, um, von einem ersten Sensorknoten (S1), eine erste Reihe von Messdaten (210) und, von einem zweiten Sensorknoten (S2), eine zweite Reihe von Messdaten (220) zu empfangen, wobei der erste Sensorknoten (S1) mit einem ersten Fähigkeitstyp klassifiziert ist und der zweite Sensorknoten (S2) mit einem zweiten Fähigkeitstyp assoziiert ist, der sich vom ersten Fähigkeitstyp unterscheidet;
eine Datenspeicherungskomponente (1003), die konfiguriert ist, um eine erste Datenbank (DB1) zum Speichern der empfangenen ersten und zweiten Reihe von Messdaten (210, 220) zu speichern;
eine Extraktorkomponente (1002), die konfiguriert ist, um ein erstes Testmuster (1101) aus der ersten Reihe von Messdaten (210) und ein zweites Testmuster (1102) aus der zweiten Reihe von Messdaten (220) zu extrahieren; und
eine Klassifikatorkomponente (1005), die konfiguriert ist, um eine Beziehung zwischen dem ersten Sensorknoten (S1) und dem zweiten Sensorknoten (S2) durch ein Ähnlichkeitsmaß für das erste Testmuster (1101) und das zweite Testmuster (1102) zu bestimmen, wobei das Ähnlichkeitsmaß mit einem Vertrauenswert assoziiert ist; ferner konfiguriert ist, um den ersten Fähigkeitstyp als eine zusätzliche Klassifizierung des zweiten Sensorknotens (S2) zu empfehlen, falls der Vertrauenswert über einem vordefinierten Schwellenwert liegt; und ferner konfiguriert ist, um eine Aktualisierung der Infrastrukturwissensbank (100) zu initiieren, um den ersten Fähigkeitstyp als die zusätzliche Klassifizierung des zweiten Sensorknotens (S2) hinzuzufügen, falls der erste empfohlene Fähigkeitstyp akzeptiert wird.

## Revendications

1. Procédé mis en oeuvre par ordinateur (4000) pour la classification de capteurs, comprenant :
la réception (4100) en provenance d'un noeud de capteurs (SU) d'une série de données de mesure (200), où le noeud de capteurs (SU) est inconnu dans une base de connaissances d'infrastructure (100) ;
l'enregistrement (4200) des séries de données de mesure (200) dans une première base de données (DB1) ;
l'extraction (4300) d'un modèle de test (1100) des séries de données de mesure (200) provenant de la première base de données (DB1) ;
la détermination (4400) d'une mesure de similarité pour le modèle de test (1100) et d'un modèle de référence prédéfini (1200) enregistré dans une seconde base de données (DB2), où le modèle de référence (1200) classe un type d'aptitude et où la mesure de similarité est associée à une valeur de confiance (CV) ;
la suggestion (4500) du type d'aptitude pour classifier le noeud de capteurs (SU) si la valeur de confiance (CV) se situe au-dessus d'une valeur seuil prédéfinie ; et
l'initiation (4600) d'une mise à jour de la base de connaissances d'infrastructure (100) pour enregistrer le noeud de capteurs précédemment inconnu (SU) avec le type d'aptitude suggéré si le type d'aptitude suggéré est accepté.

2. Procédé (4000) selon la revendication 1, dans lequel la détermination comprend en outre:
la sélection d'un algorithme de similarité à meilleure concordance en fonction d'une catégorie de données des séries de données de mesure.

3. Procédé (4000) selon la revendication 2, dans lequel la catégorie de données consiste en des données binaires ou des données continues.

4. Procédé (4000) selon l'une quelconque des revendications précédentes, dans lequel la suggestion (4500) comprend en outre :
la présentation du type d'aptitude et de la valeur de confiance (CV) pour un utilisateur ; et
dans lequel l'initiation (4600) comprend en outre:
la réception d'un indicateur d'acceptation en provenance de l'utilisateur.

5. Procédé (4000) selon la revendication 2, dans lequel l'algorithme de similarité à meilleure concordance possède un niveau de confiance individuel assigné et l'algorithme respectif est pondéré en se basant sur le niveau de confiance individuel respectif.

6. Procédé (4000) selon l'une quelconque des revendications précédentes, dans lequel le modèle de référence (1200) est basé sur des données provenant d'un emplacement différent et d'un moment différent de ceux de la série de données de mesure (210).

7. Procédé (4000) selon l'une quelconque des revendications précédentes, dans lequel le modèle de test (1100) et le modèle de référence (1200) comprennent des vecteurs de caractéristiques respectifs, un vecteur de caractéristiques ayant de multiple éléments vecteurs, dans lequel procédé le vecteur de caractéristiques est associé à un algorithme de similarité correspondant.

8. Procédé mis en oeuvre par ordinateur (5000) pour la classification de capteurs, comprenant :
la réception (4100) en provenance d'un premier noeud de capteurs (S1) d'une première série de données de mesure (210) et d'un second noeud de capteur (S2) d'une seconde série de données de mesure (220), où, dans une base de connaissances d'infrastructure (100), le premier noeud de capteurs (S1) est classifié avec un premier type d'aptitude et le second noeud de capteurs (S2) est classifié avec un second type d'aptitude différent du premier type d'aptitude ;
l'enregistrement (5200) de la première série de données de mesure (210) et de la seconde série de données de mesure (220) dans une première base de données (DB1) ;
l'extraction (5300) dans la première base de données (DB1) d'un premier modèle de test (1101) de la première série de données de mesure (210) et d'un second modèle de test (1101) de la seconde série de données de mesure (220) ;
la détermination (4400) d'une relation entre le premier noeud de capteurs (S1) et le second noeud de capteurs (S2) par une mesure de similarité pour le premier modèle de test (1101) et le second modèle de test (1102), où la mesure de similarité est associée à une valeur de confiance ;
la suggestion (5500) du premier type d'aptitude en tant que classification supplémentaire du second noeud de capteurs (S2) si la valeur de confiance se situe au-dessus d'une valeur seuil prédéfinie ; et
l'initiation (5600) d'une mise à jour de la base de connaissances d'infrastructure (100) pour ajouter le premier type d'aptitude en tant que classification supplémentaire du second noeud de capteurs (S2) si le premier type d'aptitude suggéré est accepté

9. Procédé selon la revendication 8, comprenant en outre :
l'ajout (5700) à une seconde base de données (DB2) du premier modèle de test (1101) sous forme de modèle de référence (1201) pour le second type d'aptitude, dans lequel la seconde base de données (DB2) enregistre déjà un premier modèle de référence pour le premier type d'aptitude et un second modèle de référence pour le second type d'aptitude

10. Produit de programmation informatique qui, une fois chargé dans une mémoire d'un dispositif informatique et exécuté par au moins un processeur du dispositif informatique, exécute les étapes des procédés mis en oeuvre par ordinateur selon l'une quelconque des revendications 1 à 9.

11. Système informatique (1000), comprenant :
un composant d'interface (1001) configuré pour recevoir des données de mesure d'une pluralité de noeuds de capteurs (S1, S2, S3, SU), où un noeud de capteurs déployé (SU) est inconnu dans une base de connaissances d'infrastructure (100) ;
un composant de stockage de données (1003) configuré pour stocker une première base de données (DB1) pour stocker une série de données de mesure (210) du noeud de capteurs déployé (SU) et pour stocker une seconde base de données (DB2) avec une pluralité de modèles de référence (1200) classifiant divers types d'aptitudes ;
un composant extracteur (1002) configuré pour extraire un modèle de test (1100) de la série de données de mesure (210) de la première base de données (DB1) ; et
un composant classificateur (1005) configuré pour déterminer une mesure de similarité pour le modèle de test (1100) et un modèle de référence (1200), où le modèle de référence (1200) classifie un type d'aptitude, où la mesure de similarité est associée à une valeur de confiance ; et configuré en outre pour suggérer le type d'aptitude pour classifier le noeud de capteurs inconnu déployé (SU) si la valeur de confiance se situe au-dessus d'une valeur seuil prédéfinie ; et configuré en outre pour initier une mise à jour de la base de connaissances d'infrastructure (100) avec le type d'aptitude du noeud de capteurs précédemment inconnu déployé (SU) si le type d'aptitude suggéré est accepté.

12. Système informatique selon la revendication 11, dans lequel le composant classificateur est en outre configuré pour sélectionner un algorithme de similarité de meilleure concordance en fonction d'une catégorie de données de la série de données de mesure.

13. Système informatique selon la revendication 11 ou 12, dans lequel un algorithme de similarité qui est utilisé pour déterminer la mesure de similarité est associé à au moins un algorithme d'extraction de manière à ce que l'au moins un algorithme d'extraction génère le modèle de test qui est approprié pour l'algorithme de similarité

14. Système informatique selon les revendications 11 à 13, dans lequel le modèle de test inclut une pluralité de vecteurs de caractéristiques, chaque vecteur de caractéristiques étant une entrée appropriée pour au moins un algorithme de similarité.

15. Système informatique (1000) comprenant :
un composant d'interface (1001) configuré pour recevoir d'un premier noeud de capteurs (S1) une première série de données de mesure (210) et d'un second noeud de capteurs (S2) une seconde série de données de mesure (220), dans lequel le premier noeud de capteurs (S1) classifié avec un premier type d'aptitude et le second noeud de capteurs (S1) est classifié avec un second type d'aptitude différent du premier type d'aptitude ;
un composant de stockage de données (1003) configuré pour stocker une première base de données (DB1) pour stocker les première et seconde séries de données de mesure reçues (210, 220) ;
un composant extracteur (1002) configuré pour extraire un premier modèle de test (1101) de la première série de données de mesure (210) et un second modèle de test (1102) de la seconde série de données de mesure (220) ; et
un composant classificateur (1005) configuré pour déterminer une relation entre le premier noeud de capteurs (S1) et le second noeud de capteurs (S2) par une mesure de similarité pour le premier modèle de test (1101) et le second modèle de test (1102), dans lequel la mesure de similarité est associée à une valeur de confiance ; configuré en outre pour suggérer le type d'aptitude en tant que classification supplémentaire du second noeud de capteurs (S2) si la valeur de confiance se situe au-dessus d'une valeur seuil prédéfinie ; et configuré en outre pour initier une mise à jour de la base de connaissances d'infrastructure (100) pour ajouter le premier type d'aptitude en tant que classification supplémentaire du second noeud de capteurs (S2) si le type d'aptitude suggéré est accepté.
